# EUROPÄISCHE PATENTSCHRIFT

(11) **EP 3 727 783 B1**
(45) Veröffentlichungstag und Bekanntmachung des Hinweises auf die Patenterteilung: **04.01.2023**
(21) Anmeldenummer: 18807969.3
(22) Anmeldetag: 22.11.2018
(51) Int. Cl.: B29C 35/08, H01B 13/012, H01B 7/36, C08L 33/08

(54) **VORRICHTUNG ZUR HERSTELLUNG EINER UMMANTELUNG FÜR KABEL**
DEVICE FOR MANUFACTURING A SHEATH FOR CABLES
DISPOSITIF DE FABRICATION D'UNE GAINE POUR DES CÂBLES

(30) Priorität: 20.12.2017 DE 202017107757 U
(43) Veröffentlichungstag der Anmeldung: 28.10.2020
(73) Patentinhaber: Certoplast Technische Klebebänder GmbH, 42285 Wuppertal (DE)
(72) Erfinder: GHARIBE, Samer, 42369 Wuppertal (DE); RAMBUSCH, René, 42113 Wuppertal (DE); LEERMANN, Timo, 42369 Wuppertal (DE)
(74) Vertreter: Andrejewski - Honke Patent- und Rechtsanwälte Partnerschaft mbB
(86) Internationale Anmeldenummer: PCT/EP2018/082274
(87) Internationale Veröffentlichungsnummer: WO 2019/120864

(56) Entgegenhaltungen:
- WO-A1-2017/072263
- WO-A1-2018/091547
- CN-A- 106 653 163
- DE-A1-102014 216 761
- DE-A1-102015 214 929
- JP-A- 2009 104 889
- JP-A- 2014 111 721

## Beschreibung

Die Erfindung betrifft eine Vorrichtung zur Herstellung einer Ummantelung für Kabel, insbesondere einer Ummantelung für Kabel in Automobilen, mit zumindest einem Manipulator und einer an den Manipulator angeschlossenen Düse zur Ausgabe eines aushärtbaren flüssigen Kunststoffmaterials im Zuge eines generativen Fertigungsverfahren.

Allgemein dient die Ummantelung von elektrischen Kabeln in Automobilen primär dafür, dass die fraglichen Kabel zu einem Kabelbündel oder Kabelstrang zusammengefasst werden. Dazu kommen bisher in der Praxis überwiegend speziell ausgelegte Klebebänder zum Einsatz. Zugleich sorgt die Ummantelung für einen mechanischen Schutz der einzelnen Kabel bzw. des Kabelstranges oder Kabelbündels. Durch den spezifischen Einsatzzweck muss die Ummantelung flexibel sein, um beispielsweise einer gebogenen Verlegung eines solchermaßen hergestellten Kabelstranges im Innern eines Automobiles folgen zu können. Hinzu kommt, dass insbesondere bei einer Verlegung des fraglichen Kabelstranges im Motorraum spezifische Anforderungen hinsichtlich der dort herrschenden Temperaturen und auch im Hinblick auf eine etwaige Beständigkeit gegenüber Medien wie beispielsweise Benzin und Öl erfüllt werden müssen.

So wird für derartige Ummantelungen eine überwiegende ÖI- und Benzinresistenz gefordert. Außerdem müssen solche Ummantelungen selbstverständlich elektrisch isolierend ausgelegt sein. Ferner wird eine Temperaturstabilität angestrebt, die beispielsweise zu einer minimalen Dauergebrauchstemperatur von minus 40° C und einer maximalen Dauergebrauchstemperatur von 100° C bei einer Beanspruchungsdauer von 3.000 Stunden korrespondiert. In diesem Fall wird die Ummantelung in die zugehörige Temperaturklasse B entsprechend der Norm LV 312 (10/2009) eingruppiert.

Diese Norm klassifiziert zwar Klebebänder im Hinblick auf ihre Eigenschaften für Anwendungen in der Automobilindustrie, vorzugsweise zum Bündeln und Umwickeln von Leitungen und Leitungssätzen, ist jedoch auch generell für Ummantelungen praktikabel, die solche Klebebänder ersetzen sollen.

Darüber hinaus werden im Rahmen dieser Norm bestimmte Abriebsbeständigkeiten und Geräuschdämpfungsklassen unterschieden, die für die fraglichen Klebebänder maßgeblich und einschlägig sind. Eine Übersicht über die fragliche Norm und die entsprechenden Kriterien wird beispielhaft im Gebrauchsmuster DE 20 2014 106 247 U1 vorgestellt, auf welches ausdrücklich verwiesen sei.

In der Praxis werden die angesprochenen Klebebänder typischerweise spiral- oder wendeiförmig um die einzelnen Kabel zur Realisierung des jeweiligen Kabelbündels und im Endeffekt zur Herstellung der gewünschten Kabelbäume in Kraftfahrzeugen herumgewickelt. Das ist aufwendig und lässt sich aktuell praktisch nur auf manuellem Wege bewerkstelligen, zumal die Anzahl der in der Praxis realisierten Kabelbäume aufgrund der Modellvielfalt an Kraftfahrzeugen nahezu unüberschaubar ist. Ähnliche Probleme ergeben sich für den Fall, dass eine Schlauchummantelung durch einen gebildeten Umschlag eines in Axialrichtung verlaufenden Schlauchstückes als Ummantelung eingesetzt wird.

Die bisherigen und in der Praxis eingesetzten Vorgehensweisen sind mit dem gravierenden Nachteil verbunden, dass sämtliche Arten der Umwicklung der einzelnen Kabel zur Herstellung von Kabelbäumen in Kraftfahrzeugen bzw. Automobilen manuell umgesetzt werden. Denn praktisch jeder Kabelbaum stellt ein Unikat dar, so dass sich die Herstellung bisher nicht maschinengestützt realisieren lässt.

Im gattungsbildenden Stand der Technik nach der DE 10 2014 216 761 A1 werden bereits Ansätze verfolgt, eine maschinell aufbringbare Ummantelung bei der Herstellung eines Kabelsatzes auf oder an diesem anzubringen. Zu diesem Zweck wird das jeweilige Leitungsbündel mit einem Bündelungselement ausgerüstet. Bei dem Bündelungselement handelt es sich um eine textilartige Faserverflechtung, die durch Aufbringen einer Fasern und Bindemittel umfassenden Suspension auf das Leitungsbündel als flüssiges Kunststoffmaterial hergestellt wird. Das flüssige Kunststoffmaterial kann anschließend getrocknet werden, wobei sich bei der Trocknung das Lösungsmittel verflüchtigt, so dass aus der Suspension die textilartige Faserverflechtung ausgebildet wird.

Im Rahmen des bekannten Verfahrens nach der DE 10 2014 217 761 A1 kann die Suspension auf die zusammengefassten Leitungen aufgespitzt werden, wobei das auf diese Weise realisierte bandartige Bündelungselement helixartig um die zusammengefassten Leitungen geführt wird. In diesem Zusammenhang ist auch ein mehrmaliges Aufbringen der Suspension im Wechsel mit Trocknungsphasen oder Nachbehandlungen denkbar, so dass sich hierdurch auch ein insgesamt generatives Fertigungsverfahren realisieren lässt.

Der weitere Stand der Technik nach der JP 2014 111721 A betrifft eine vernetzbare Silan-Zusammensetzung und die Möglichkeit, mit deren Hilfe eine Mantelschicht bei elektrischen Leitungsadern aufbauen zu können. Die bekannte Mantelschicht kann extrudiert und vernetzt werden.

Der weitere und nächstkommende Stand der Technik nach der CN 106 653 163 A befasst sich mit einer Vorrichtung zur Herstellung einer Ummantelung für elektrische Kabel, bei der die Ummantelung ebenfalls in einem generativen Fertigungsprozess aufgebracht wird. Dabei greift die bekannte Lehre auch auf einen aushärtbaren flüssigen Kunststoff zurück, liegt die Ummantelung allerdings insgesamt abstandsfrei an den Kabeln an, so dass sich etwaige Probleme in Biegebereichen eines hierdurch hergestellten Kabelbaumes ergeben können.

Der Stand der Technik hat sich grundsätzlich bewährt, stößt jedoch durch die im Endeffekt realisierte textilartige Faserverflechtung an der Oberfläche an Grenzen. So soll die Faserverflechtung insgesamt von ihrer Struktur her einem Vlies ähneln, zugleich aber hinsichtlich der Reißfestigkeit vergleichbar derjenigen eines gewebten Textils sein. Das wird im Endeffekt auf den zusätzlich in der Suspension vorhandenen Binder zurückgeführt. Allerdings kann der gewichtsmäßige Anteil des Binders nur relativ niedrig eingestellt werden, um dennoch die für die Verarbeitung nötige Fließfähigkeit der bekannten Suspension sicherzustellen. Daraus resultieren in der Praxis Festigkeitsprobleme.

Außerdem kann insgesamt nicht gewährleistet werden, dass die auf diese Weise hergestellte Ummantelung eine im Wesentlichen durchgängige Schichtstärke aufweist, so dass insgesamt entweder der auf diese Weise hergestellte Kabelsatz nicht die notwendige Flexibilität für seine anschließende Verlegung aufweist oder die Kabel bzw. Leitungen nicht einwandfrei zusammengefasst werden. Hinzu kommt, dass solche Ummantelungen heutzutage oftmals eingefärbt werden (müssen), um beispielsweise die hiermit ausgerüsteten Kabelstränge zu identifizieren.

So kennt man unter anderem in Verbindung mit Elektroautos die Vorgabe, dass Hochspannungskabel orange gekennzeichnet werden. Selbstverständlich sind auch andere Farbgebungen außer einer typischerweise eingesetzten Schwarzfärbung oftmals erforderlich. Das wird im Regelfall durch den Zusatz von Farbpigmenten zum Kunststoffmaterial erreicht, welche bei der bekannten Lehre aufgrund der eingesetzten Suspension zu einer Schwächung oder doch zumindest zu einer ungleichmäßigen Verteilung führen, zumal sich die eingesetzten Fasern im Regelfall hierdurch nicht färben lassen bzw. zuvor eingefärbt werden müssen, was den Aufwand vergrößert. Hier will die Erfindung insgesamt Abhilfe schaffen.

Der Erfindung liegt das technische Problem zugrunde, eine derartige Vorrichtung so weiter zu entwickeln, dass eine homogene Ummantelung großer Flexibilität zur Verfügung gestellt wird und zugleich die Möglichkeit einer problemlosen Einfärbung besteht.

Zur Lösung dieser technischen Problemstellung ist gemäß Anspruch 1 eine gattungsgemäße Vorrichtung zur Herstellung einer Ummantelung für Kabel und insbesondere einer Ummantelung für Kabel in Automobilen im Rahmen der Erfindung dadurch gekennzeichnet, dass die Ummantelung als flexible Schlauchummantelung die Kabel bzw. einen auf diese Weise zusammengefassten Kabelstrang mit geringem Abstand umhüllt, wobei für den Aufbau der Ummantelung zunächst eine erste Schicht auf einer Basis dadurch aufgebaut wird, dass der Manipulator gesteuert mit einer Steuereinheit eine kreisförmige Bewegung um den durch eine Öffnung in der Basis hindurchgeführten Kabelstrang vollführt, und wobei das Kunststoffmaterial ein gepfropftes Acrylatpolymer als Hauptbestandteil aufweist.

Die Strahlenvernetzung des Polymers kann grundsätzlich mit Hilfe von elektromagnetischen Strahlen oder auch Elektronenstrahlen erfolgen. Meistens wird das strahlenvernetzbare Polymer mit Hilfe von UV-Strahlen vernetzt. Darüber hinaus lässt sich das Kunststoffmaterial insgesamt vorteilhaft extrudieren, ist also extrudierbar ausgebildet.

Folgerichtig kommt im Rahmen der Erfindung zunächst einmal und ausdrücklich keine Suspension zum Einsatz, sondern wird vielmehr die gewünschte Ummantelung für die Kabel aus einem flüssigen Kunststoffmaterial aufgebaut, welches in der Regel extrudiert und durch die Einwirkung von insbesondere elektromagnetischen Strahlen aushärtet bzw. aushärtbar ausgelegt ist. Vorteilhaft erfolgt die Aushärtung dabei auf physikalischem Wege, nämlich durch eine Vernetzung mit UV-Strahlen, folglich eine UV-Vernetzung. Durch den Rückgriff auf ein zunächst flüssiges und dann aushärtbares Kunststoffmaterial mit einem strahlenvernetzbaren Polymer auf Acrylatbasis als Hauptbestandteil, gelingt die Fertigung der Ummantelung homogen und einfach. Das heißt, das strahlenvernetzbare Polymer auf Acrylatbasis liegt zu mehr als 50 Gew.-% in dem Kunststoffmaterial vor.

Auf diese Weise können problemlos und zusätzlich Farbpigmente dem Kunststoffmaterial zugesetzt werden, und zwar ohne dass Inhomogenitäten befürchtet werden müssen. Dadurch wird vorteilhaft ein UV-vernetzbares Polymer auf Acrylatbasis und insbesondere ein UV-vernetzbarer Acrylatkautschuk als Hauptbestandteil des Kunststoffmaterials eingesetzt, der zum Aufbau der Ummantelung für elektrische Kabel mit Hilfe der beschriebenen Vorrichtung dient.

Bei dem erfindungsgemäß eingesetzten strahlenvernetzbaren Polymer handelt es sich um ein gepfropftes Acrylatpolymer. Das gepfropfte Acrylatpolymer ist mit seitlichen Verzweigungen ausgerüstet, die an eine bestehende Polymerkette bzw. ein Polymergerüst als Rückgrat angebunden sind. Tatsächlich verfügt das gepfropfte Acrylatpolymer erfindungsgemäß über Hydroxy-, Carboxyl- oder Epoxy-funktionalisierte Acrylatmonomere, welche durch Pfropfen funktionalisiert werden. Das beschriebene Pfropfen verleiht dem Acrylatpolymer die gewünschte Arcrylatfunktionalität, so dass anschließend die Vernetzung und insbesondere UV-Vernetzung der einzelnen Polymerketten untereinander erfolgen kann. Dadurch entstehen jeweils Acrylatderivate.

Der gewichtsmäßige Anteil der Hydroxy-, Carboxyl- oder Epoxy-Gruppen beträgt bis zu 10 Gew.% bezogen auf das Acrylatpolymer. Außerdem ist das Acrylatpolymer im Regelfall mit einem Molekulargewicht zwischen 40.000 und 100.000 ausgerüstet. Das Acrylatpolymer kann seinerseits aus einem Monomer bestehen, welches aus der Gruppe ausgewählt ist, die beispielsweise IsoOctylacrylat, Methylacrylat, Ethylacrylat und Vinylacetat sowie Kombinationen aufweist.

Das Kunststoffmaterial ist zusätzlich zu dem strahlenvernetzbaren Polymer auf Acrylatbasis mit einem Photoinitiator, Füllstoffen, Farbstoffen und gegebenenfalls einem Vernetzer ausgerüstet. Mit Hilfe des Photoinitiators wird die Vernetzungsreaktion der einzelnen Polymerketten bei insbesondere Bestrahlung mit UV-Strahlung und damit das Aushärten des Kunststoffmaterials insgesamt realisiert.

Hinsichtlich des Photoinitiators und gegebenenfalls des Vernetzers empfiehlt die Erfindung, dass diese zu 0,01 bis 10 Teilen pro 100 Teile des strahlenvernetzten Polymers im Kunststoffmaterial vorhanden sind und zum Einsatz kommt. Als geeigneter Photoinitiator und insbesondere UV-Photoinitiator kann beispielsweise Benzyldemethylketal-Photoinitiator eingesetzt werden, was selbstverständlich in keiner Weise einschränkend ist.

Der Füllstoff und gegebenenfalls der Farbstoff sind ihrerseits zu 0,1 bis 60 Teilen pro 100 Teile des strahlenvernetzbaren Polymers im Kunststoffmaterial enthalten. Das heißt, das strahlenvernetzbare Polymer stellt nach wie vor den Hauptbestandteil im Kunststoffmaterial mit mehr als 50 Gew.-% dar, wobei zusätzlich auch der Füllstoff und gegebenenfalls der Farbstoff einen signifikanten Anteil wie beschrieben einnehmen können.

Die physikalische Vernetzung bzw. UV-Vernetzung des flüssigen Kunststoffmaterials bzw. des darin gewichtsmäßig als Hauptbestandteil enthaltenden strahlenvernetzbaren Polymers auf Acrylatbasis erfolgt in der Regel mit Hilfe einer als UV-Strahler ausgebildeten Behandlungseinheit. Der UV-Strahler emittiert dabei typischerweise in einem Wellenlängenbereich zwischen 200 nm und 600 nm, bevorzugt zwischen 300 nm und 400 nm.

In diesem Zusammenhang hat es sich besonders bewährt, wenn als UV-Strahler wenigstens eine LED bzw. UV-LED zum Einsatz kommt. Meistens wird mit mehreren UV-LEDs gearbeitet, die matrixartig angeordnet sind. Die von dem eingesetzten UV-Strahler abgegebene Strahlendosis liegt dabei typischerweise im Bereich von mehr als 20 mJ/cm² bis zu circa 800 mJ/cm², insbesondere bis zu circa 400 mJ/cm².

Schließlich kann dem Kunststoffmaterial beispielsweise auch ein Farbpigment oder mehrere Farbpigmente zugegeben werden. Hier hat sich eine Menge von bis zu 50 Teilen pro 100 Teile des strahlenvernetzen Polymers als besonders günstig erwiesen. Da sich die Farbpigmente isotrop im flüssigen Kunststoffmaterial verteilen, ist mit einer insgesamt homogenen und problemlosen Einfärbung zu rechnen.

Im Ergebnis wird eine Vorrichtung zur Verfügung gestellt, mit deren Hilfe die gewünschte flexible Schlauchummantelung zur Bündelung von Kabeln insbesondere in Automobilen in geringem Abstand an die Kabel angeformt wird, und zwar mithilfe des generativen Fertigungsverfahrens. Das heißt, die fragliche Ummantelung wird Schicht für Schicht durch das generative Fertigungsverfahren aufgebaut. Jede Schicht korrespondiert in diesem Zusammenhang zu einer dreidimensionalen Raumkurve, deren Ausdehnung und Lage im Raum von einem Rechner bzw. einer Steuereinheit vorgegeben wird, welche den Manipulator und die an den Manipulator angeschlossene Düse beaufschlagt.

Nach dem Aufbau der betreffenden Schicht wird die Schicht und folglich die Ummantelung gehärtet, und zwar physikalisch sowie vorzugsweise durch eine UV-Vernetzung. Zu diesem Zweck wird die betreffende Schicht mithilfe der als UV-Strahler ausgebildeten Behandlungseinheit beaufschlagt.

Bei alledem gelingt die Herstellung besonders einfach und schnell, weil die im Kunststoffmaterial enthaltenen strahlenvernetzbaren Polymere ebenso wie das Kunststoffmaterial insgesamt problemlos in erhitztem Zustand durch Extrusion bzw. Auftrag mit der Düse verarbeitet werden können. Das Kunststoffmaterial verlässt in geschmolzener Form die Düse und wird anschließend durch Vernetzung ausgehärtet. Nachdem der fragliche Kunststoff und folglich die Schicht ausgehärtet ist, kann Schritt für Schritt die gewünschte Ummantelung aufgebaut werden und steht unmittelbar nach Abschluss des generativen Fertigungsverfahrens zur Verfügung. Das heißt, auf diese Weise lassen sich flexibel Kabelbäume oder Kabelstränge in praktisch beliebiger Form und Ausprägung realisieren, und zwar auf maschinelle Art und Weise und unter Verzicht auf manuelle Wickelvorgänge von Klebebänder. Hierin sind die wesentlichen Vorteile zu sehen.

Im Folgenden wird die Erfindung anhand einer lediglich an Ausführungsbeispiel darstellenden Zeichnung näher erläutert; es zeigen:
- Fig. 1: eine Vorrichtung zur Herstellung einer Ummantelung für elektrische Kabel respektive zur Bündelung von Kabeln in Automobilen zu einem Kabelbündel,
- Fig. 2: das auf diese Weise hergestellte Kabelbündel in einer Seitenansicht, teilweise im Schnitt,
- Fig. 3: das Kabelbündel als Bestandteil eines auf einem Formbrett konfektionierten Kabelbaumes und
- Fig. 4: die Basis für den Aufbau der flexiblen Schlauchummantelung im Detail.

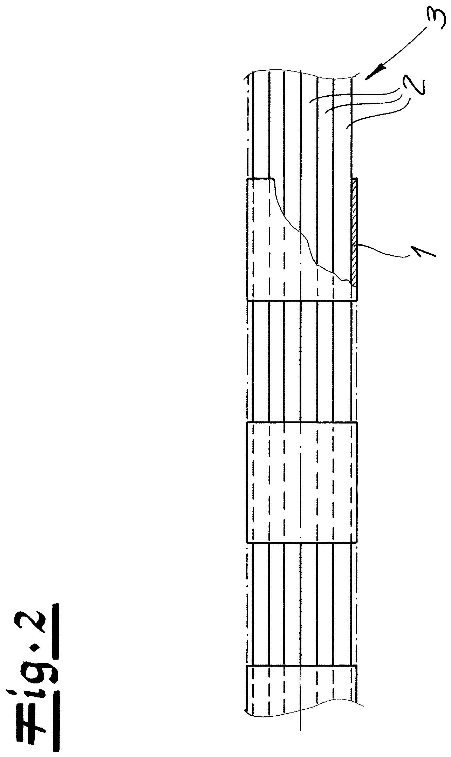

In den Figuren ist eine Vorrichtung zur Herstellung einer Ummantelung 1 für elektrische Kabel 2 dargestellt. Die Ummantelung 1 kann die fraglichen Kabel 2 über ihre gesamte axiale Länge gesehen durchweg umhüllen. Das ist strichpunktiert in der Fig. 2 angedeutet. Daneben liegen aber auch Ausführungsbeispiele im Rahmen der Erfindung, bei welchen die Ummantelung nur sektionsweise für eine Umhüllung der Kabel 2 sorgt. Hierzu korrespondiert die durchgezogene Darstellung in der Fig. 2. Bei den Kabeln 2 handelt es sich im Ausführungsbeispiel um elektrische Kabel als Bestandteile eines auf diese Weise realisierten Kabelstranges 3. Der Kabelstrang 3 inklusive Ummantelung 1 ist in den Darstellungen als Bestandteil eines Kabelbaumes 12 zur elektrischen Verkabelung innerhalb eines Automobils ausgelegt.

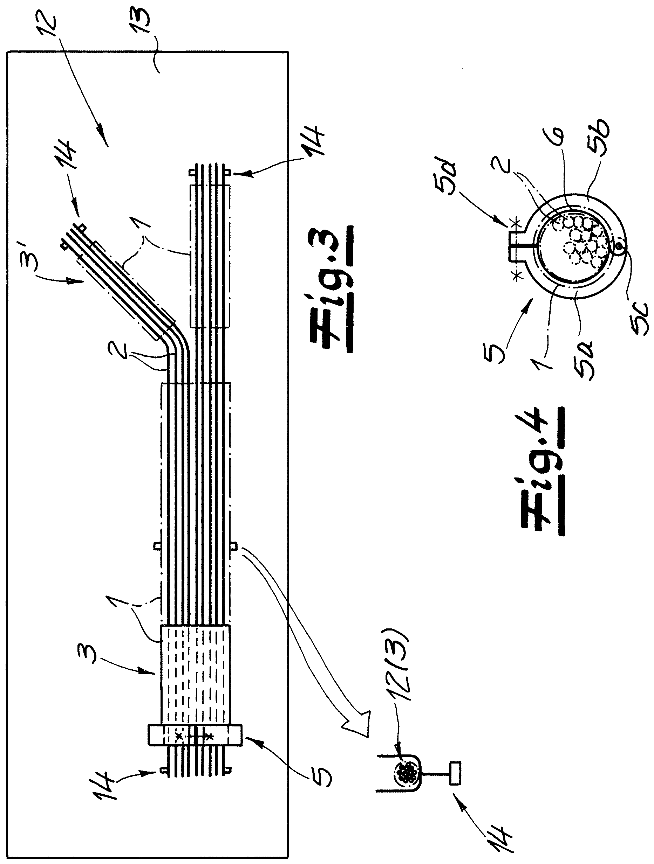

Der Kabelbaum 12 ist im Detail in der Fig. 3 dargestellt. Zur Konfektionierung des Kabelbaumes 12 und auch zur Anbringung der jeweiligen Ummantelung 1 der einzelnen Kabel 2 wird der fragliche Kabelbaum 12 im Ausführungsbeispiel auf einem sogenannten Formbrett 13 aufgenommen und gehalten. Solche Formbretter 13 sind generell im Stand der Technik bekannt, wozu auf die DE 10 2011 084 786 B4 verwiesen sei. Zur Halterung des Kabelbaumes 12 auf dem Formbrett 13 können einzelne Halterungen 14 respektive Abstandhalter 14 vorgesehen sein.

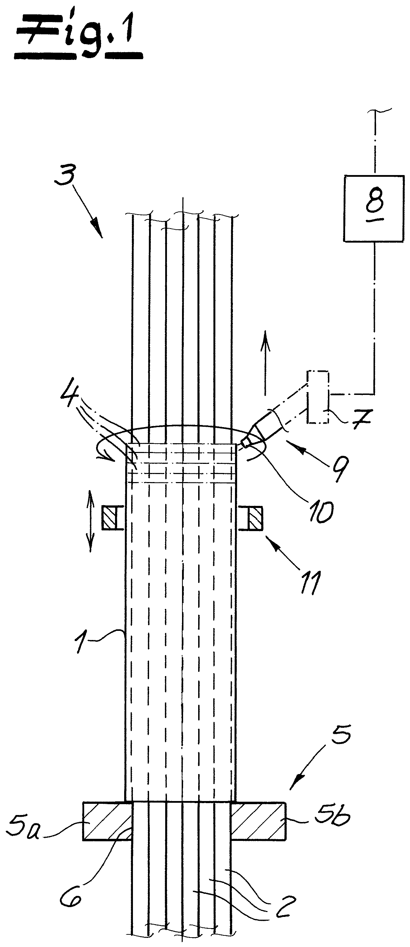

Die Ummantelung 1 wird nun erfindungsgemäß ganz oder teilweise mit Hilfe eines generativen Fertigungsverfahrens durch den Aufbau einer vorgegebenen Schichtenfolge produziert, wie dies im Detail in der Fig. 1 angedeutet ist. Tatsächlich erkennt man in der Fig. 1 eine als flexible Schlauchummantelung 1 im Detail ausgebildete Ummantelung 1, die die Kabel 2 ganz oder teilweise in ihrer Längsrichtung umhüllt. Mit Hilfe der flexiblen Schlauchummantelung 1 werden die Kabel 2 zu dem Kabelstrang 3 gebündelt. Aus den einzelnen Kabelsträngen 3 ist dann der Kabelbaum 12 zum Einbau in das nicht näher dargestellte Automobil aufgebaut.

Das im Rahmen der Erfindung realisierte generative Fertigungsverfahren zeichnet sich dadurch aus, dass die Ummantelung bzw. die flexible Schlauchummantelung 1 durch einzelne Schichten 4 realisiert wird, die im Ausführungsbeispiel nach der Fig. 1 Stoß an Stoß übereinander aufgebaut sind und aneinander anschließen, so dass auf diese Weise aus den einzelnen ringförmigen Schichten 4 insgesamt die mehr oder minder zylindrische flexible Schlauchummantelung 1 hergestellt wird. Die Schichten 4 bilden folglich die Schichtenfolge, welche mithilfe des generativen Fertigungsverfahrens mit geringem Abstand an die Kabel 2 angeformt wird.

Man erkennt, dass die flexible Schlauchummantelung 1 die Kabel 2 im Rahmen der Darstellung nach der Fig. 1 bzw. den auf diese Weise zusammengefassten Kabelstrang 3 mit geringem Abstand umhüllt. Das heißt, die flexible Schlauchummantelung 1 liegt außen mit Abstand am Kabelstrang 3 an und sorgt auch für eine gegenseitige Fixierung der Kabel 2 zueinander, um diese zu dem Kabelstrang 3 zu bündeln. Die Schlauchummantelung 1 kann ihrerseits mithilfe beispielsweise eines Klebebandes oder anderer Befestigungsmittel am Kabelstrang 3 in axialer Richtung gesichert werden. Grundsätzlich sorgen auch beispielsweise eine Abzweigung 3' des Kabelstranges 3 entsprechend der Darstellung in der Fig. 3 oder andere Elemente für eine axiale Sicherung der flexiblen Schlauchummantelung 1.

Die Schlauchummantelung 1 kann direkt und schichtweise auf den Kabelstrang 3 aufgebracht werden, was jedoch nicht dargestellt ist. Tatsächlich können hierbei die einzelnen Schichten 4 der flexiblen Schlauchummantelung 1 winklig zur Längserstreckung des Kabelstranges 3 spiralförmig um den Kabelstrang 3 herumgeführt werden. In diesem Fall definieren die einzelnen Schichten 4 wiederum einen größtenteils zylindrischen Körper, allerdings derart, dass die einzelnen Schichten 4 wendeiförmig um den Kabelstrang 3 herumgeführt sind und sich hierbei zumindest teilweise überlappen. Das ist insgesamt nicht gezeigt.

Im Rahmen des Ausführungsbeispiels sind die Schichten 4 und die daraus realisierte Schichtenfolge so aufgebaut, dass die einzelnen Schichten 4 Stoß auf Stoß gleichsam übereinander gestapelt werden und dadurch die insgesamt zylindrische flexible Schlauchummantelung 1 formen und definieren. Dazu wird die fragliche Schlauchummantelung 1 auf einer Basis 5 aufgebaut. Die Basis 5 ist im Ausführungsbeispiel scheibenartig mit zentraler Öffnung 6 für den hierdurch geführten Kabelstrang 3 ausgelegt. Vorliegend sind die Basis 5 und der Kabelstrang 3 ortsfest ausgelegt. Grundsätzlich kann die Basis 5 aber auch rotieren. Ebenso ist eine Relativbewegung zwischen der Basis 5 und dem Kabelstrang 3 möglich.

Der Detailaufbau der Basis 5 erschließt sich anhand der Fig. 4. Hier erkennt man, dass die Basis 5 insgesamt mehrteilig und zerlegbar aufgebaut ist. Im Ausführungsbeispiel und nicht einschränkend setzt sich die Basis 5 aus zwei Halbschalen bzw. zwei Halbkreisen 5a, 5b zusammen, die über ein Drehgelenk 5c miteinander gekoppelt sind. Ein zusätzlicher Verschluss 5d sorgt dafür, dass die beiden um den Kabelstrang 3 bzw. die einzelnen Kabel 2 herumgelegten Halbschalen 5a, 5b in eingebautem Zustand zueinander gesichert sind. Mithilfe der solchermaßen aufgebauten zerlegbaren Basis 5 kann der Kabelstrang 3 von der Basis 5 umschlossen werden, und zwar auch in auf dem Formbrett 13 fixierten Zustand entsprechend der Darstellung in der Fig. 3.

Dazu ist es lediglich erforderlich, das Formbrett 13 entsprechend im Vergleich zu einer nachfolgend noch näher zu beschreibenden Düse 10 bzw. einem Manipulator 9 auszurichten. Tatsächlich wird man meistens so vorgehen, dass das Formbrett 13 oder allgemein eine Halterung 13 für den Kabelbaum 12 einerseits und die Düse 10 andererseits unabhängig voneinander jeweils räumlich bewegt werden können. Grundsätzlich kann aber auch so gearbeitet werden, dass entweder nur das Formbrett bzw. die Halterung 13 oder nur die Düse 10 räumlich bewegbar ausgelegt sind.

Im Ausführungsbeispiel sind die Basis 5 und der Kabelstrang 3 jeweils ortsfest. Gleiches mag für das Formbrett 13 gelten. Der Kabelstrang 3 mit seinen zu bündelnden Kabeln 2 wird durch die Öffnung 6 in der Basis 5 hindurchgeführt. In der Darstellung nach der Fig. 1 erkennt man einen Antrieb 7, welcher den bereits angesprochenen Manipulator 9 beaufschlagt. Dazu ist eine Steuereinheit 8 vorgesehen, welche den Antrieb 7 respektive den Manipulator 9 beaufschlagt. Mithilfe des Antriebes 7 kann der Manipulator 9 in der in Fig. 1 angedeuteten Axialrichtung bewegt werden, so dass die dort auf der Basis 5 aufgebaute Schichtenfolge nachvollziehbar ist. Zusätzlich sorgt der Manipulator 9 dafür, dass die angeschlossene Düse 10 die in der Fig. 1 angedeuteten Kreisbewegungen bzw. Bogenbewegungen zur Realisierung der Schichtenfolge vollführt. Bei dem Manipulator 9 mag es sich um einen Roboter oder Roboterarm handeln, welcher insgesamt dreidimensionale Bewegungen vollführen kann.

Über die Düse 10 wird ein formloses flüssiges Material in Gestalt eines flüssigen Kunststoffes, nach einem Aspekt der Erfindung eines Kunststoffmaterials mit einem strahlenvernetzbaren Polymer auf Acrylatbasis als Hauptbestandteil abgegeben. Das Kunststoffmaterial ist flüssig und aushärtbar angelegt. Hierfür sorgt primär das strahlenvernetzbare Polymer auf Acrylatbasis als Hauptbestandteil, wie dies zuvor bereits beschrieben wurde. Dazu enthält das flüssige Kunststoffmaterial neben dem strahlenvernetzbaren Polymer auf Acrylatbasis nicht nur ein UV-Vernetzungsmittel bzw. einen Photoinitiator, sondern wahlweise auch Farbpigmente in der zuvor angegebenen Gewichtszusammensetzung.

Für den Aufbau der Ummantelung 1 wird zunächst eine erste Schicht 4 auf der Basis 5 dadurch aufgebaut, dass der Manipulator 9 gesteuert mithilfe der Steuereinheit 8 eine in der Fig. 1 dargestellte und lediglich angedeutete kreisförmige Bewegung um den durch die Öffnung 6 hindurchgeführten Kabelstrang 3 vollführt. Nachdem die erste Schicht 4 ausgehärtet ist, bringt der Manipulator 9 mit der Düse 10 auf die erste Schicht 4 eine weitere zweite Schicht 4 auf, so dass im Endeffekt die bereits beschriebene und die zylindrische flexible Schlauchummantelung 1 definierende Schichtenfolge auf der Basis 5 aufgebaut wird, indem die Schichtenfolge bzw. die Schlauchummantelung 1 die Öffnung 6 mit dem dadurch hindurchgeführten Kabelstrang 3 umringt.

Die Schlauchummantelung 1 wird folglich auf der Basis 5 aufgebaut. Von der Basis 5 ausgehend umhüllt die Schlauchummantelung 1 den Kabelstrang 3. Die einzelnen Schichten 4 der Schichtenfolge und folglich der flexiblen Schlauchummantelung 1 werden mit einer Aufbaugeschwindigkeit von bis zu 100 mm/s an erreichbarer Schichthöhe auf der Basis 5 produziert. Um das an dieser Stelle eingesetzte und über Düsen 10 in flüssiger Form abgegebene Kunststoffmaterial auszuhärten, ist eine Behandlungseinheit 11 vorgesehen. Die Behandlungseinheit 11 lässt sich im Ausführungsbeispiel wenigstens axial entlang des Kabelstranges 3 hin- und herbewegen, wie ein Doppelpfeil in der Fig. 1 andeutet. Auf diese Weise kann die Behandlungseinheit 11 jeweils für die physikalische Behandlung der Schichtenfolge respektive der jeweiligen Schicht 4 eingesetzt und genutzt werden.

Bei der Behandlungseinheit 11 handelt es sich um eine solche, die zur physikalischen Verfestigung der einzelnen Schichten 4 respektive der auf diese Weise gebildeten flexiblen Schlauchummantelung 1 eingesetzt wird. Tatsächlich handelt es sich bei der Behandlungseinheit 11 im Ausführungsbeispiel um eine solche, die auf optischem Wege für eine Vernetzung des Kunststoffmaterials sorgt. Durch die Vernetzung der betreffenden Schicht 4 mithilfe der Behandlungseinheit 11 respektive des an dieser Stelle realisierten UV-Strahlers wird die Schicht 4 schrittweise gehärtet. Zum Abschluss kann dann die Basis 5 entfernt werden und ist die flexible Schlauchummantelung 1 an der gewünschten Stelle des Kabelstranges 3 vorhanden.

## Patentansprüche

1. Vorrichtung zur Herstellung einer Ummantelung (1) für elektrische Kabel (2), insbesondere einer Ummantelung (1) für Kabel (2) in Automobilen, mit zumindest einem Manipulator (9) und einer an den Manipulator (9) angeschlossenen Düse (10) zur Ausgabe eines aushärtbaren flüssigen Kunststoffmaterials im Zuge eines generativen Fertigungsverfahrens, wobei
die Ummantelung (1) ganz oder teilweise mithilfe des generativen Fertigungsverfahrens durch den Aufbau einer Schichtenfolge produziert wird,
**dadurch gekennzeichnet, dass**
die Ummantelung (1) als flexible Schlauchummantelung (1) die Kabel (2) bzw. einen auf diese Weise zusammengefassten Kabelstrang (3) mit geringem Abstand umhüllt, wobei ferner
für den Aufbau der Ummantelung (1) zunächst eine erste Schicht (4) auf einer Basis (5) dadurch aufgebaut wird, dass der Manipulator (9) gesteuert mit einer Steuereinheit (8) eine kreisförmige Bewegung um den durch eine Öffnung (6) in der Basis (5) hindurchgeführten Kabelstrang (3) vollführt, und wobei
das Kunststoffmaterial ein gepfropftes Acrylatpolymer als Hauptbestandteil aufweist.

2. Vorrichtung nach Anspruch 1, **dadurch gekennzeichnet, dass** das gepfropfte Acrylatpolymer Hydroxy-, Carboxyl- oder Epoxy-funktionalisierte Acrylatmomomere enthält, welche durch Pfropfen funktionalisiert werden.

3. Vorrichtung nach Anspruch 1 oder 2, **dadurch gekennzeichnet, dass** das Kunststoffmaterial zusätzlich zu dem strahlenvernetzbaren Polymer einen Photoinitiator, Füllstoffe, Farbstoffe und gegebenenfalls einen Vernetzer aufweist.

4. Vorrichtung nach Anspruch 3, **dadurch gekennzeichnet, dass** der Photoinitiator und gegebenenfalls der Vernetzer zu 0,01 bis 10 Teilen pro 100 Teile des strahlenvernetzbaren Polymers im Kunststoffmaterial enthalten sind.

5. Vorrichtung nach Anspruch 3 oder 4, **dadurch gekennzeichnet, dass** der Füllstoff und gegebenenfalls der Farbstoff zu 0,1 bis 60 Teilen pro 100 Teile des strahlenvernetzbaren Polymers im Kunststoffmaterial enthalten sind.

6. Vorrichtung nach einem der Ansprüche 1 bis 5, **dadurch gekennzeichnet, dass** das Kunststoffmaterial mithilfe einer als UV-Strahler ausgebildeten Behandlungseinheit (11) physikalisch verfestigt wird.

7. Vorrichtung nach Anspruch 6, **dadurch gekennzeichnet, dass** der UV-Strahler in einem Wellenlängenbereich zwischen 200 nm bis 600 nm, vorzugsweise zwischen 300 nm und 400 nm, emittiert.

8. Vorrichtung nach Anspruch 6 oder 7, **dadurch gekennzeichnet, dass** dass der UV-Strahler wenigstens eine LED, insbesondere UV-LED, aufweist.

9. Vorrichtung nach einem der Ansprüche 6 bis 8, **dadurch gekennzeichnet, dass** dass der UV-Strahler eine Strahlendosis von mehr als 20 mJ/cm² bis zu circa 800 mJ/cm² erzeugt.

## Claims

1. Apparatus for manufacturing a sheath (1) for electrical cables (2), in particular a sheath (1) for cables (2) in automobiles, comprising at least one manipulator (9) and one nozzle (10) connected to the manipulator (9) for dispensing a curable liquid plastic material in the course of a generative manufacturing method, wherein the sheath (1) is produced entirely or partly using the generative manufacturing method by constructing a layering sequence,**characterized in that** the sheath (1) closely envelops the cables (2) or a wiring harness (3) constituted in this way in the manner of a tubular sheath (1), wherein further for the construction of the sheath (1) initially a first layer (4) is built up on a base (5) by the manipulator (9) performing a circular movement about the wiring harness (3) which is fed through an opening (6) in the base (5), which movement is controlled with a control unit (8), and wherein the plastic material includes a grafted acrylate polymer as the main constituent.

2. Apparatus according to Claim 1, **characterized in that** the grafted acrylate polymer contains hydroxyl-functionalised, carboxyl-functionalised or epoxy-functionalised acrylate monomers, which are functionalised by grafting.

3. Apparatus according to Claim 1 or 2, **characterized in that** in addition to the radiation-crosslinkable polymer the plastic material also includes a photoinitiator, filler agents, colouring agents, and optionally a crosslinking agent.

4. Apparatus according to Claim 3, **characterized in that** the photoinitiator, and optionally the crosslinking agent, is/are contained in the plastic material in the amount of 0.01 to 10 parts per 100 parts of the radiation-crosslinkable polymer.

5. Apparatus according to Claim 3 or 4, **characterized in that** the filler, and optionally the colouring agent, is/are contained in the plastic material in the amount of 0.1 to 60 parts per 100 parts of the radiation-crosslinkable polymer.

6. Apparatus according to any one of Claims 1 to 5, **characterized in that** the plastic material is physically solidified by means of a treatment unit (11) embodied as a UV radiator.

7. Apparatus according to Claim 6, **characterized in that** the UV radiator emits in a wavelength range between 200 nm and 600 nm, preferably between 300 nm and 400 nm.

8. Apparatus according to Claim 6 or 7, **characterized in that** the UV radiator has at least one LED, in particular a UV-LED.

9. Apparatus according to any one of Claims 6 to 8, **characterized in that** the UV radiator generates a radiation dose of more than 20 mJ/cm² up to about 800 mJ/cm².

## Revendications

1. Dispositif de fabrication d'un gainage (1) pour câbles électriques (2), en particulier d'un gainage (1) pour câbles (2) dans le secteur automobile, avec au moins un manipulateur (9) et une buse (10) raccordée au manipulateur (9) pour extraire un matériau de matière plastique liquide durcissable au cours d'un procédé de fabrication génératif, sachant que
le gainage (1) est produit entièrement ou en partie à l'aide du procédé de fabrication génératif par la structuration d'une succession de couches,
**caractérisé en ce que**
le gainage (1) enveloppe en tant que gainage tubulaire souple (1) les câbles (2) ou un faisceau de câbles (3) assemblé de cette manière à une faible distance, sachant en plus que
pour la structuration du gainage (1), une première couche (4) est d'abord constituée sur une base (5) par le fait que le manipulateur (9) piloté avec une unité de commande (8) exécute un mouvement circulaire autour du faisceau de câbles (3) passé à travers une ouverture (6) dans la base (5), et sachant que
le matériau de la matière plastique comporte un polymère d'acrylate greffé en tant que composant principal.

2. Dispositif selon la revendication 1, **caractérisé en ce que** le polymère d'acrylate greffé contient des monomères d'acrylate fonctionnalisés hydroxy, carboxy ou époxy, lesquels sont fonctionnalisés par greffage.

3. Dispositif selon la revendication 1 ou 2, **caractérisé en ce que** le matériau de la matière plastique comporte en plus du polymère réticulé par rayonnement, un photo-initiateur, une matière de remplissage et le cas échéant un agent réticulant.

4. Dispositif selon la revendication 3, **caractérisé en ce que** le photo-initiateur et le cas échéant l'agent réticulant sont contenus dans le matériau de la matière plastique de 0,01 à 10 parties pour 100 parties du polymère réticulé par rayonnement.

5. Dispositif selon la revendication 3 ou 4, **caractérisé en ce que** le matériau de remplissage et le cas échéant le colorant sont contenus dans le matériau de la matière plastique de 0,1 à 60 parties pour 100 parties du polymère réticulé par rayonnement.

6. Dispositif selon l'une quelconque des revendications 1 à 5, **caractérisé en ce que** le matériau de la matière plastique est physiquement solidifié à l'aide d'une unité de traitement (11) constituée comme un émetteur de rayons UV.

7. Dispositif selon la revendication 6, **caractérisé en ce que** l'émetteur de rayons UV émet dans une gamme de longueurs d'ondes se situant entre 200 nm à 600 nm, de préférence entre 300 nm et 400 nm.

8. Dispositif selon la revendication 6 ou 7, **caractérisé en ce que** l'émetteur de rayons UV comporte au moins une diode électroluminescente (DEL), en particulier une DEL à UV.

9. Dispositif selon l'une quelconque des revendications 6 à 8, **caractérisé en ce que** l'émetteur de rayons UV produit une dose de rayonnement de plus de 20 mJ/cm² à environ 800 mJ/cm².
